# EUROPEAN PATENT APPLICATION

(11) **EP 1 327 974 A2**
(43) Date of publication of application: **16.07.2003**
(21) Application number: 02258087.2
(22) Date of filing: 25.11.2002
(51) Int. Cl.: G10L 13/08

(54) **System and method for providing locale-specific interpretation of text data**

(30) Priority: 09.01.2002 US 43878
(71) Applicant: Openwave Systems Inc., Redwood City, CA 94063 (US)
(72) Inventor: Boxberger-Oberoi, Samya, Burlingame, CA 94010 (US); Cong, Lin, Palo Alto, California 94306 (US)
(74) Representative: Jackson, Richard Eric

(57) **Abstract**

A system and method for generating native-sounding speech in a system prompt or in a text-to-speech processor or application is disclosed. A number of locales are defined representing particular languages, regions and dialects, and a set of locale-specific rules are defined for each locale. The locale-specific rules define how certain types of words, symbols, characters, punctuation and other elements should be interpreted. The locale-specific rules are used by a messaging system to generate native-sounding prompts that are played for callers. The locale-specific rules may also be used by a text-to-speech process to generate native-sounding speech for the user. The locale-specific rules may be implemented in a software class, program or application. The locale-specific rules incorporate a hierarchical structure in which rules that are common to a number of languages are grouped at one level and more specific rules are organized at lower levels in the hierarchy.

## Description

### BACKGROUND OF THE INVENTION

Universal messaging systems are used to store voice messages, electronic mail (e-mail) messages, text messages and other information. A text message or e-mail message may be converted to speech so that a user may access such messages via a telephone or other audio device. Text-to-speech engines are used to provide conversion from text files or e-mail messages to spoken messages.

In addition to text files or e-mail messages, the messaging system may need to convert other text or variables to speech as part of a system prompt or other system message that is played for a user. For example, the system may play a message indicating how many new messages are available to the user (e.g. "You have *x* new messages"). The number "*x*" may be a variable that is stored in the messaging system for each user. When the prompt is to be played for the user, the system retrieves the value of *x* and inserts the value into the message, and then converts the complete message to speech so that it can be played to the user.

The text files may contain numbers, abbreviations, symbols, punctuation and other elements that have to be considered when converting the text to speech. The rules for converting these elements to speech may vary depending upon the language that is being converted. The rules for conversion may also vary depending upon the location of the speaker or user.

If text files are converted using a single set of rules without regard to the language or location of the user, then the user is likely to detect certain anomalies or mistakes in the converted message. For example, the gender or case of certain words, such as the name of a number or symbol, may not be a consideration in some languages, while case and gender are important in other languages. Accordingly, for certain users the converted messages would not sound as if they were being spoken by a native-speaker.

It is an object of the present invention to provide a system and method for converting text to speech so that the converted speech is native-sounding for most or all users.

It is another object of the invention to provide language- or locale-specific rules for converting text to speech in order to produce native-sounding speech.

### SUMMARY OF THE INVENTION

The present invention is directed to a system and method that provides native-sounding system prompts and converted text-to-speech. In a unified messaging system messages may be stored as text files, such as e-mail messages, or as voice messages, among other formats. If a user desires to access his e-mail messages or other text files via a telephone or audio connection, the e-mail message must be converted to speech. Such conversion is typically performed in a text-to-speech engine.

In a messaging system that is accessed by users from around the world, certain globalization considerations must be taken into account, such as the ability to interact with various telephone systems and protocols. Once the system is adapted to provide access to a worldwide network of users, the user interface can become complex because of the need to interact with the individual users. The individual users may speak many different languages, and each user expects a nearly personalized user interface that is user-friendly and native-sounding. The process of providing each user with a native-sounding user interface is referred to as localization.

In order to improve localization, the present invention provides a set of locale-specific rules for use by the messaging system's prompts and by its text-to-speech engines. A "locale" may be defined based upon the language that is used in a particular location, such as in a country or region. The text-to-speech interpretation rules for certain "locales" may overlap the rules for other locales. Accordingly, the locale-specific rules may be organized in a hierarchy in which common rules are grouped at one level and more specific rules for particular locales are in lower levels of the hierarchy.

Individual users may select a desired locale. The preferred locale may be designated in a user profile that is referenced whenever the user requests that a text message be converted to speech. The text-to-speech conversion process in the system may use the locale-specific rules to interpret the text file. The messaging system also uses the locale-specific rules that are implemented by the present invention to localize the system prompts that are played for users.

The locale-specific rules may be provided as a software application or in a software class that can be introduced into the messaging system or text-to-speech software application.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings, in which:
FIGURE 1 is a block diagram of an exemplary system incorporating an embodiment of the present invention;
FIGURE 2 is a flow chart that illustrates the hierarchical structure of one embodiment of a software class that is used to implement the present invention;
FIGURE 3 illustrates the organization of number interpretation for one embodiment of the locale-specific rules of the present invention;
FIGURE 4 is an exemplary call flow diagram for use in a system embodying the present invention;
FIGURE 5 is an exemplary call flow diagram for presenting user prompts in a system embodying the present invention;
FIGURE 6 is an exemplary call flow diagram for retrieving voice messages in a system embodying the present invention; and
FIGURE 7 is an exemplary call flow diagram for retrieving email messages in a system embodying the present invention.

### DETAILED DESCRIPTION

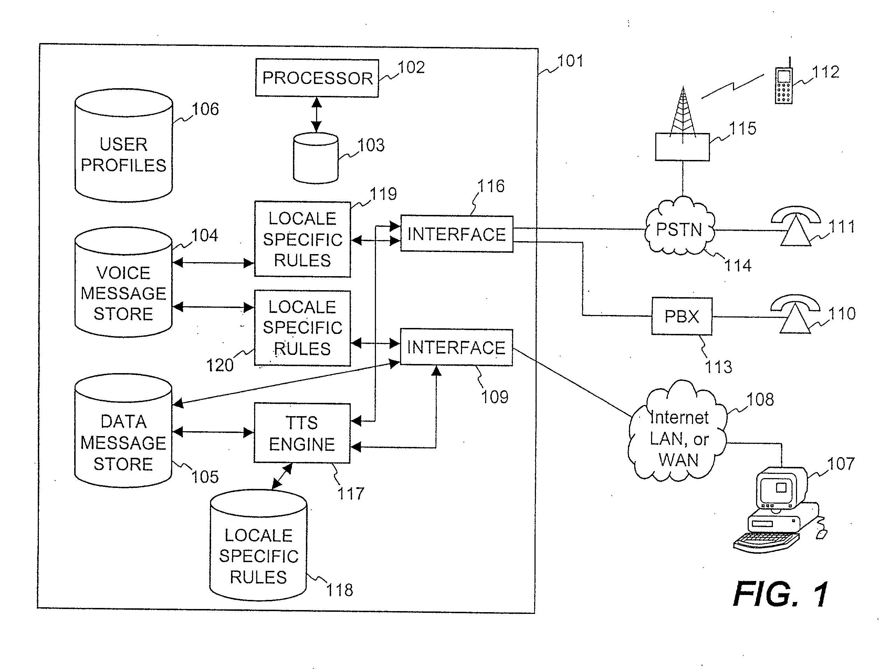

Figure 1 is an exemplary system that incorporates one embodiment of the present invention. Messaging system 101 provides messaging services to a plurality of users. Preferably, messaging system 101 is capable of handling different types of messages in a variety of formats, such as text or e-mail messages and voice messages. Messaging system 101 comprises processor 102 that controls the function and operation of the messaging system. Memory 103 stores program instructions and data that are used by processor 102, such an operating system, application software, or any other instructions or information needed by processor 102.

Voice message store 104 provides storage of voice or other audio messages in messaging system 101. These messages may include messages that are stored for particular users, such as voice mail messages, and messages that are used to interact with users, such as prompt messages, tones, or other audio messages. Messages may be stored on voice message store 104 in any analog or digital format now known or later developed. Preferably, the messages are stored in a digital format, such as a "*.WAV," or "*.MP3" files, that can be easily manipulated and processed by processor 102 or other components in messaging system 101.

Data message store 105 provides storage of data and text messages. These messages may include e-mail messages; graphics, picture or other image files; other text-based documents, such as word processing files and spreadsheets; and the like. The messages stored on voice message store 104 and data message store 105 are preferably stored in an organized and indexed manner so that messages associated with a particular user may be easily identified and retrieved as needed.

Messaging system 101 also includes user profile storage 106, which comprises a plurality of user profiles. In a preferred embodiment, the user profiles comprise information about a user, such as a voice mail account identification, an e-mail account identification, a list of messaging services or features available to the user, and the like.

Users may access messaging system 101 to retrieve, process and/or leave messages, or to configure a user profile. User access may be accomplished through a data connection, such as through a computer network, or through a voice connection, such as through a telephone network. Users accessing messaging system 101 via a computer or data connection 107 are coupled to messaging system 101 through the Internet, an Intranet, a Wide Area Network (WAN), a Local Area Network (LAN), or any other local or distributed computer network 108 now known or later developed. Computer network interface 109 provides a connection between messaging system 101 and computer network 108. Data messages, such as e-mail or other data files from data message store 105, may be exchanged with computer 107. This allows a user, for example, to access an email account to retrieve messages, to leave messages for other users, or to configure or modify a user profile.

Messaging system 101 may also be configured to provide access to voice message store 104 via computer 107. For example, if messages are stored in a digital format as digital files on voice message store 104, the digital files may be sent to computer 107. The user could then play the digital files to hear the message, for example, on speakers attached to computer 107. In another embodiment, using known Voice Over IP (VOIP) technology, an audio voice message could be played to the user at computer 107.

Users may also access messaging system 101 using a voice connection, such as via telephone 110 or 111, or via wireless device 112. Telephone 110 may be in a business or office telephone network, such as Private Branch Exchange (PBX) 113. Telephone 111 may be any telephone that is connected to the Public Switched Telephone Network (PSTN) 114. Wireless device 112 is in communication with wireless network 115 and may communicate using any wireless communication protocol or standard now known or later developed. Wireless network 115 is coupled to PSTN 114 to allow wireless device 112 to communicate with any other wireless devices or telephones, for example, telephones 110 and 111.

Voice network interface 116 provides connections between messaging system 101 and voice networks 113-115. Voice messages, such as voice mail from voice message store 104, may be accessed from telephones 110 or 111, or from wireless device 112. As is well known, this allows users to access voice mail accounts, for example, to retrieve or leave messages.

Messaging system 101 may also allow users to retrieve text and data messages via the voice connection. For example, Text-to-Speech (TTS) engine 117 can be used by messaging system 101 to convert text-based messages to speech. In this manner, a user may access both voice mail and e-mail accounts at the same time via a telephone or other audio device. TTS engine 117 receives text or data files from data message store 105. Using well-known technology, TTS engine 117 converts words, letters, numbers, symbols and other data in the text file to speech. This speech can then be routed to the user through interface 116 and via networks 113-115.

It will be understood that the conversion from text-to-speech in TTS engine 117 may be accomplished in real-time when the user accesses messaging system 101 and retrieves a text message via a voice connection. In such a situation, the text-based message can be stored in its original data format. Alternatively, the text-based files, such as e-mail, may be converted to speech when the text message is created or when it is stored in data store 105. These text or data messages can then be stored as a voice message in addition to, or instead of, the original text or data message.

For example, a user may indicate in his profile that he retrieves all of his messages via a voice connection. Thereafter, whenever a text or data message, such as an e-mail, is left in the user's account, messaging system 101 may automatically convert the test message to a audible voice message using TTS engine 117. Messaging system 101 can then store the new voice version of the message in voice message store 104. When the user later accesses his messages, system 101 will play the converted text messages in addition to any messages left in the user's voice mail.

It will also be understood that speech files may be transferred to computer 107. For example, voice messages or converted text-based messages may be stored as *.WAV or *.MP3 files. Messages having these formats can be sent to the user via computer 107 where the message is then played for the user, for example, through speakers attached to computer 107.

Persons of skill in the art will recognize that messaging system 101 is merely representative and exemplary. The configuration of messaging system 101 may be altered in well known ways. For example, memory 103, voice message store 104, data message store 105, user profile store 106, and other memories or data storage devices may be combined to reduce the number of separate storage devices and may even be combined into a single data storage device. It will be understood that certain connections, data paths, busses and other components are not shown in Figure 1 in order to simply the drawing. Processor 102 or a similar control device controls the operation of the components of system 101 and directs the storage, retrieval, reception, transmission, and conversion of messages within system 101. Messaging system 101 may be embodied as a single device, for example, as a dedicated server. Alternatively, messaging system 101 may be a distributed system in which two or more components are embodied in separate devices. Messaging system 101 may also be embodied as a component of another system. For example, messaging system 101 may be part of PBX network 113, wireless network 116 or computer network 108.

Since messaging system 101 is accessible via both voice and computer networks, it is not limited to users in a particular area, region or country. In a preferred embodiment, system 101 has been internationalized such that it may be accessed by any voice network or data network without regard to the location of the user. Moreover, telephones 110, 111, and 112, networks 113, 114, and 115, computer 107 and computer network 108 may be in any location as long as they can be communicatively coupled to messaging system 101 via a telephone, computer or other network.

Users of messaging system 101 may read and speak many different languages and dialects. As a result, voice messages and text messages that are stored on messaging system 101 may be in a number of different languages. It is desirable that the user interface and messages are presented to users in their native language. Preferably, the user interface and messages will also be "localized" so that messaging system 101 presents a native-like interface to each individual user. In a preferred embodiment of messaging system 101, the internationalization of the system allows it to be used globally by worldwide users, while at the same time the system is localized for each individual user so that the user experiences native-like interaction with the system.

One area in which localization is most apparent is in the conversion of text to speech. Particularly, the text-to-speech conversion of numbers or numerical expressions may vary depending upon the language, the region or country, and other factors. The present invention provides localization for the system prompts and for the system's text-to-speech conversion process by providing accurate and native-like interpretation of numbers and numerical expressions, such as times, dates, durations and other number data. By providing locale-specific rules either within TTS engine 117 or in an associated database 118, TTS engine 117 can accurately process text and provide a native-like interpretation on a per locale basis.

The locale specific rules are not limited to the conversion of data messages in a text-to-speech processor or application. The present locale specific rules of the present invention may also be applied to messages that are stored in voice message store 104, such as system prompts or voice mail messages. As these messages or prompts are retrieved from, or stored to, voice message store 104, they may be processed by locale specific rules processors 119 or 120. It will be understood that the system illustrated in Figure 1 is for exemplary purposes only and is not intended to limit the embodiment of the invention described herein. For example, in other embodiments, locale specific rule processors 119 and 120 may be a single processor or may be a function of another component, such as system processor 102. Such a processor may implement the TNClass class (Time-Number Class), which is described in detail below, to implement the localization rules.

The use of locale-specific rules ensures that TTS engine 117 correctly interprets numbers for a particular locale. The locale-specific rules also ensure that the system prompts use the correct number format for the selected locale. Preferably, the rules address numbers such as times, dates, telephone numbers, counting numbers and the like. For example, depending upon the language and the locale, time formats can vary between 12-hour and 24-hour clocks. Once the proper time format is determined, the locale-specific rules of the present invention provide guidelines as to how that time should sound when spoken. This may require the addition of other words to the numbers or numerical expression in the converted, spoken message. These words may be inherent in the original numerical representation. For example, words such as "AM," "PM," "noon," "morning," "afternoon" or similar words may have to be added to the time data so that, when spoken, the time sounds the way a native-speaker would expect the time to be spoken.

Date formats also vary by locale, language and country. For example, dates may be represented in formats such as: mm/dd/yyyy, dd/mm/yyyy, or yyyy/mm/dd. Once one of these formats is identified, the text-to-speech engine or application must determine how that date should sound to a native-speaker in a selected locale. The date is then converted from textual numbers into a spoken phrase. Similarly, the system may select menu prompts or other predefined messages based upon the appropriate date format for a particular locale.

In addition to identifying numbers in a text file as a time, date, counting number, telephone number, or the like, other linguistic considerations must be taken into account when converting numbers in text to a spoken number, date or time. For example, in some languages, numbers are gender and case sensitive. Accordingly, the output of the text-to-speech conversion must use the proper gender and case for the language and locale.

In a preferred embodiment, localization is provided by introducing a new software class to the TTS engine, processor or application. For example, a class, called TNClass, may be defined. The TNClass provides text-to-speech rules on a per locale basis. TNClass is built using locale inheritance by which a hierarchy may be established among related languages so that certain languages or locales inherit common rules of another language. TNClass provides definition and interpretation of grammatical and linguistic rules at a locale level. These rules take into consideration the nuances and peculiarities that are inherent in text-to-speech processing.

TNClass interprets locale specific issues related to times, dates, numbers and durations. As discussed in detail below, the TNClass consists of several parts to process times, dates, numbers and durations. The class can be implemented on a per locale basis both at the user interface (or prompt) level and at the text-to-speech engine level. For example, if user-interface prompts or portions of prompts are stored as variables or text files, the TNClass may be used by the messaging system to interpret how that prompt should be converted to speech based upon a user's locale. In this manner, the user-interface is more user friendly and the user will hear prompts that are more natural and native-sounding. The TNClass can also be used to interpret in-line numbers that are embedded within the text of an e-mail or other text file.

It is expected that one of skill could implement the TNClass in any programming language or software that is used by a messaging system, such as system 101. For example, the TNClass could be implemented as a C++ class, or it could be implemented in PHP. The selected programming language is dependent only upon the system that will run the application or program that uses TNClass.

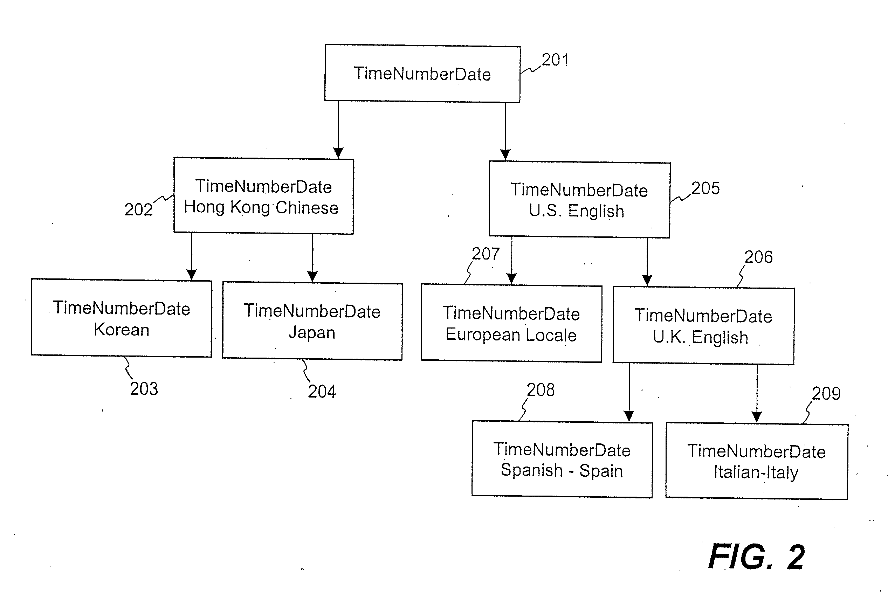

TNClass preferably provides a hierarchy of locale-specific rules in which a broad group of common locale rules are grouped a one level. More specific locale rules are separately grouped in lower levels of the hierarchy. Figure 2 illustrates the hierarchical structure of TNClass. Initially, messaging system 101 determines that a number is present in a text string that is to be converted to speech. That text string may be part of an e-mail message or part of a system prompt. The number may represent, for example, a time, a number, or a date. Messaging system 101 uses the TNClass to interpret how to properly convert that number to speech. An initial step 201 is used to determine whether the number is a time, number or date, or to identify the language or locale that is being presented to the user. Then TNClass accesses a next level based upon the desired locale.

For example, TNClass may group a number of locale-specific rules that are common to Asian languages in a Chinese superset 202. Superset 202 may be specifically identified as Hong Kong Chinese, or some other language or dialect, that encompasses all the rules for that locale. Other languages and locales that use the basic Hong Kong Chinese rules may be represented as dependent locale rule sets that are linked to Hong Kong Chinese super set 202. For example, in one embodiment, Korean locale rules 203 and Japanese locale rules 204 depend from Hong Kong Chinese superset 202.

Another issue that can be addressed using the present invention is the varying interpretation of certain written words or characters in some languages. For example, in the Chinese language, the same written character may be used by speakers of the Cantonese, Mandarin and Taiwanese dialects. However, the spoken word for that character may be different for each dialect. The present invention may provide rules for such a situation in which the proper dialect must be identified in the TNClass so that the user can understand a message when a common character is converted to speech.

In another example, TNClass may combine a group of common rules for European languages under U.S. English superset 205. Accordingly, when messaging system 101 attempts to convert English text to speech, it first looks to U.S. English superset 205 to interpret numbers that are in the text. If the text is in English, but is being interpreted under locale rules for the United Kingdom, then U.K. English superset 206 may be used instead of U.S. English locale rules superset 205. In such a situation, numbers would be converted to speech using rules set forth in U.S. English superset 205, but when no locale-specific rule was defined for a particular type of number in superset 205, then TNClass would use the locale specific rules in U.K. English superset 206.

Other locale-specific rule sets may be defined based upon the U.S. English superset. For example, a default European rule set 207 may be defined to handle situations that are not addressed in U.S. English superset 205. Other specific locale rule sets may also be defined, such as Spanish-Spain rule set 208 or Italian-Italy rule set 209.

Multiple rule sets may be created for a single language depending upon the interpretation in different locales. As noted above, the rules for interpretation of numbers in the English language text may vary between U.S. and U.K. locales. A similar situation may be needed for the interpretation of Spanish. For example, Spanish-Spain rules 208 may be useful for text-to-speech conversion of Spanish text in Spain, but a different set of rules may be needed to create native-sounding speech in Mexico. Accordingly, TNClass may also define a separate set of rules for a Spanish-Mexico locale.

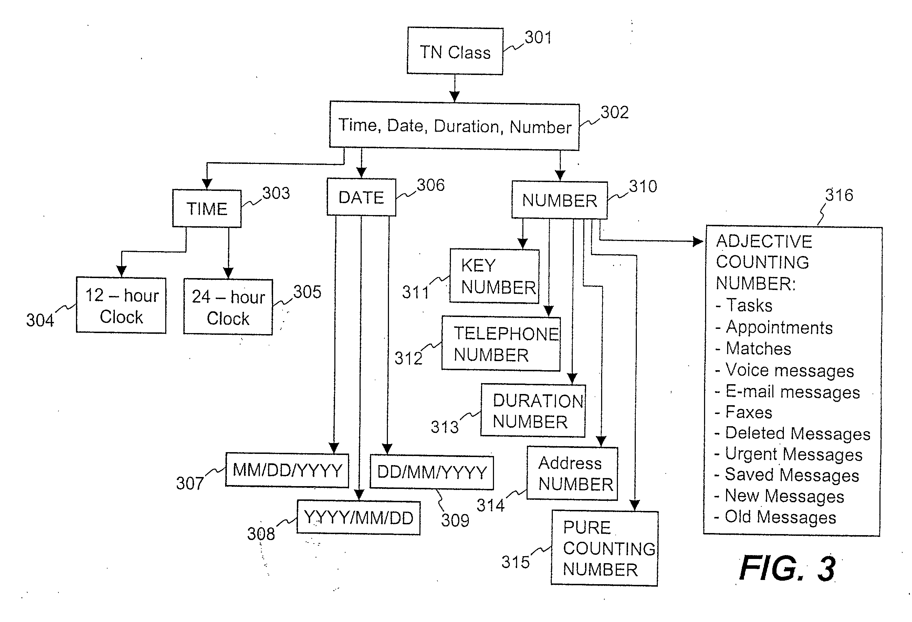

Figure 3 is a flow chart that illustrates the processes that are accomplished using TNClass. The TNClass processes may be used in a text-to-speech processor or application, while converting data messages or in another processor to localize system prompts. Alternatively, while creating prompts, system 101 may call TNClass to interpret numbers that are being included in the prompts. TNClass comprises a set of locale-specific rules for a particular locale. The user may have selected the locale as part of a user configuration or profile so that all messages for a particular user use the same locale. Alternatively, a preferred locale may be identified in the text file or in an e-mail sender's configuration or profile. In any case, once the locale is determined and a number has been identified in the text, TNClass 301 is called.

In step 302, for both the system prompts and the text-to-speech process, TNClass identifies the number as a time, date, duration, or other number. If the number is a time, then, in step 303, TNClass determines whether the number represents a time using a 12-hour clock or a 24-hour clock. TNClass may determine the clock format based upon the defined locale. If the number is a time having a 12-hour clock format, then TNClass provides guidance to the text-to-speech process using 12-hour clock rules 304 to interpret the number. Rules 304 may also be used by the system to select the appropriate system prompts. Alternatively, 24-hour clock rules 305 are used to interpret a number that represents a 24-hour clock format for a system prompt or a text-to-speech process.

In the case of a 12-hour clock, at least two formats may be required to mimic local speech behaviors. First, a general time format is needed for times that are presented in an hour:minute format with a AM or PM designation (e.g. 11:00 AM). Second, a long time format is needed to handle times in an hour:minute:second format that may or may not also have an AM or PM designation (e.g. 11:00:01 PM or 23:00:01).

These times must be interpreted differently in different locales. The numbers representing a time may have to be further identified with different time periods, such as "morning," "before noon," "afternoon," "evening," "night" and "midnight." For example, in a Spanish-Spain locale, "2 PM" is translated as {2} + {of} + {the} + {afternoon} (i.e. "two of the afternoon"). On the other hand, using a Hong Kong Chinese locale, "2 PM" would be translated as {afternoon} + {2} + {o'clock} (i.e. "afternoon 2 o'clock"). Such locale-specific rules are implemented in the TNClass. The locale-specific rules can be interpreted for each locale both for numbers in a system prompt or in a text file that is being interpreted by a text-to-speech process.

Whenever a locale requires the use of prepositions, conjunctions or articles, such as "of," "and" or "the," the syntax can be defined as part of the time format with the proper gender and case. For example, for Spanish-Spain, the date format is: {x} + {and} + {y} + {of} + {the} + {afternoon}, wherein "x" is the hour and "y" is the minutes of a 12-hour time having the form x:y. By breaking down the individual words that are needed to properly create a spoken time, the processing of the time format is accurate in all cases and genders.

If the number is identified as a date in step 302, then, in step 306, TNClass determines whether the format that is being used to represent the date. In one embodiment, there are three potential date formats: mm/dd/yyyy, yyyy/mm/dd, and dd/mm/yyyy. It will be understood that other date formats may also be used and interpreted. Some dates may not use a specific day and/or may not provide a full four digit year. For example, a number in a text file may represent a date having the format mm/yy. Alternatively, the date may be represented in a form where the month is spelled out and the day and year are represented by numbers (e.g. January 1, 2001 or 1 January 2001). In a preferred embodiment, TNClass is capable of identifying and handling all expected date formats for a selected locale. After determining the date format, the locale-specific rules for that date format (307, 308, or 309) are used to interpret the text and to convert the text to native-sounding speech.

Whenever a locale requires the use of prepositions, articles or the like to create the spoken date, the syntax can be defined as part of the time format with the proper gender and case. For example, in a Spanish-Spain locale, the date format is: {the} + {dd} + {of} + {mm} + {of} + {yyyy}. On the other hand, in most Asian locales, the date format is {yyyy} + {year} + {mm} + {month} + {dd} + {day}. The gender and case of the words "year," "month," and "day" can be modified as appropriate to match the numbers yyyy, mm, and dd.

If the number in a text file is not identified as a time or a date, it is then further interpreted in step 310. The number may be a key number, for example, used in a system prompt directing the user to press a certain key. Such key numbers would be subject to interpretation using key number rules 311.

The number may also be a telephone number, subject to interpretation using telephone rules 312. For example, if a telephone number includes an extension (e.g. 650-555-1234 x123) telephone rules 312 may provide rules for properly interpreting the extension and for converting that extension to speech. Accordingly, instead of converting the "x" to a spoken letter, telephone rules 312 may direct the text-to-speech processor or application to use the word "extension" in place of "x."

Telephone locale rules 312 may also provide rules for the grouping and interpretation of the digits within a telephone number. For example, in some European countries, for example France, the telephone number digits are grouped into two-digit segments, while in the U.S. the telephone number digits are grouped into a three-digit area code, a three-digit exchange, and a four-digit number. When converting these telephone numbers to speech in different locales, the text-to-speech engine or a system prompt selection application must know how to group these digits so that the cadence of the spoken number has a native-like sound with pauses or breaks between the correct digits.

Duration numbers would be interpreted using duration number rules 313. Address numbers would be interpreted using address number rules 314. For example, a text file may include an address, such as "1234 Main St." Simply converting that address to speech, without considering the locale, could result in the address being interpreted as "One-Thousand Two-Hundred Thirty-four Main" and some interpretation of "St." However, in the U.S. it is common for address numbers to be grouped into two-digit numbers when spoken. Also, in U.S. English, it is common that when abbreviations for street, avenue, road, boulevard, suite and other common terms are used in text, the full word is used when converted to speech or spoken. Accordingly, in one embodiment, if the text "1234 Main St" was interpreted using, U.S. English address number locale rules 314, then the converted text would become "Twelve Thirty-four Main Street" when spoken. This would be more native-sounding than a straight, literal conversion of the text message.

Counting numbers may be recognized in a text file during conversion to speech. In a particular locale, the language may differentiate between pure counting numbers and adjective counting numbers. Accordingly, for that locale, TNClass may use a set of pure counting number locale rules 315 that are different from adjective counting number locale rules 316.

Adjective counting numbers may have to match the case and gender of the associated noun, such as the number of messages, tasks, e-mails, faxes, and the like. For example, in languages such as Spanish, German and Italian, the number "one" is gender and case sensitive. However, in other languages or locales, numbers are not case or gender sensitive and different interpretations might be used.

The Korean language is an example of a language or locale that uses two numbering systems: one for "pure numbers" and another for "counting numbers." Sometimes these two numbering systems may be mixed. For example, in the case of time (e.g. 2:34:56 PM), pure numbers are used to indicate the minutes and seconds, while counting numbers are used to indicate the hour. Counting numbers are also used to express a quantity, such as "how many" e-mails, voice mails, faxes, and the like. The manner in which the numbers are expressed will depend upon whether they are pure or counting numbers. Pure numbers are expressed in terms of numeric places. For example, "65" is expressed as {'six'} + {ten} + {'five'} (i.e. "six ten five"). In other examples, "123" is expressed as "one hundred, two ten, three;" and "2,587" is expressed as "two thousand, five hundred, eight ten, seven."

It will be understood that the present invention can be adapted into any unified messaging application to provide native-sounding prompts and text-to-speech conversion. Preferably, using the present invention, the messaging system will appear to all users as if the system was developed specifically for that user's language and locale. The present invention is capable of adding words (such as prepositions and articles) to the converted text to make the spoken message more native-sounding. Also, the invention allows the system to ignore or drop certain words, characters or symbols in the converted text when those symbols are not usually used in a particular locale.

For example, if a phone number is present in a text message (e.g. 650-555-1234), the locale specific rules for U.S. English may indicate that, when converting this number to speech, the dashes should not be spoken, but should be replaced by a short pause (e.g. in one embodiment, the spoken phone number should be "six five zero" "five five five" "twelve thirty four", not "six hundred fifty dash five hundred fifty five dash one thousand, two hundred thirty four").

In another example, if the text includes an e-mail address, the locale rules can be used to direct the text-to-speech engine, processor or application to not ignore the periods in the e-mail address. Typically, a text-to-speech process should not include most of the punctuation from the text when creating a corresponding spoken message. However, if an e-mail address is detected, then the punctuation is important and should be used in the spoken version of the text. The locale-specific rules can be used to direct the text-to-speech processor how to interpret the e-mail address. The rules should direct the text-to-speech engine to pronounce periods as "dot" and the "@" sign as "at." Other characters may be used in an Internet or World Wide Web address or Uniform Resource Locator (URL). Those addresses or URLs must also be detected and converted properly without dropping or ignoring colons, slashes, ampersands, etc. Instead, the symbols ":", "\", "&" and the like must be spoken when converting a URL from text to speech.

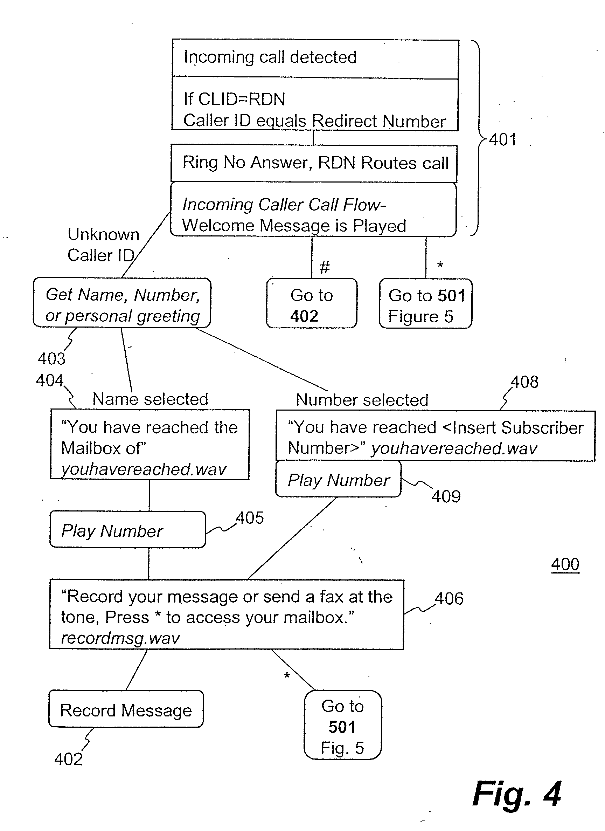

Figure 4 is an exemplary initial call flow 400 for a messaging system. In section 401, the call flow detects Caller ID (CLID) information from an incoming call and identifies the caller using that information. The call may then be routed to a redirect number for a system that handles the caller's account. The call flow then plays a welcome message for the caller. The welcome message prompts the caller to enter "*" to log-in or to enter "#" to leave a message.

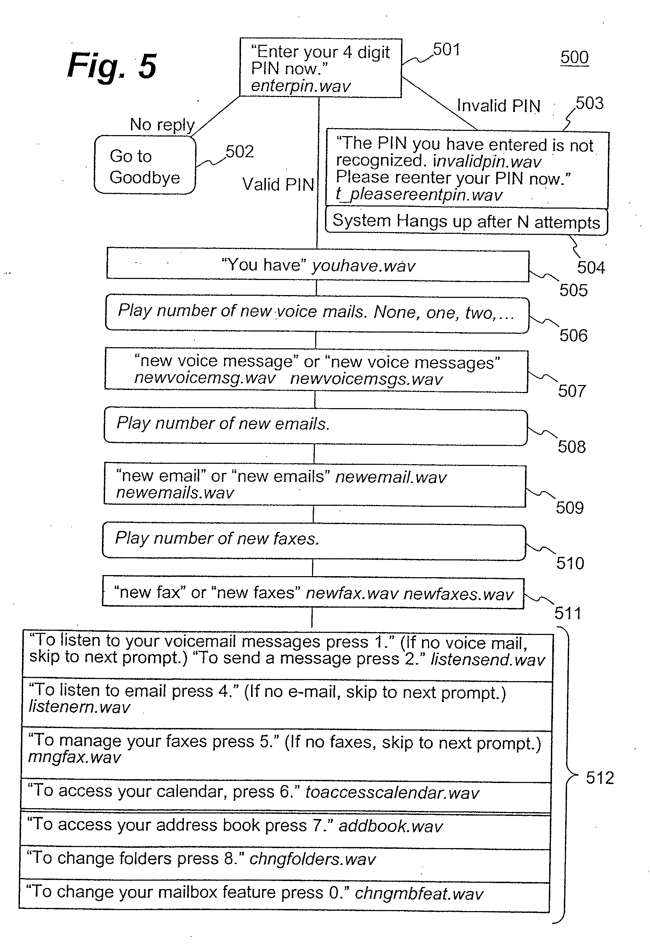

The messaging system then waits for a DTMF tone indicating which button was pressed by the caller. If a DTMF tone corresponding to "*" is detected, the call flow jumps to block 501 in Figure 5. If a DTMF tone corresponding to "#" is detected, the call flow jumps to block 402, which represents additional call flow steps associated with prompting the caller to leave a message. The details of such a call flow are known to one of skill in the art and are not included in order to simplify the Figure.

If the messaging system could not identify the caller using CLID information, then call flow 400 assumes the caller wants to leave a message and proceeds to block 403. In block 403, the messaging system prompts the caller to select a user account by name or account number. The account number may be the user's phone number or extension, for example.

Once the user's name is identified, call flow 400 moves to block 404 and plays the "youhavereached" message, such as "You have reached the mailbox of." This prompt may be stored as a *.WAV or *.MP3 file. The messaging system also concatenates the user's name to the "youhavereached" message in block 405 so that the caller hears an entire sentence that identifies the user. For example, if the user is John Doe, the caller hears "You have reached the mailbox of John Doe." The user name may also saved as a *.WAV or *.MP3 file that is retrieved when the desired user account is identified.

Call flow 400 then moves to block 406, which prompts the caller to leave a message or to enter "*" to access the mailbox. This prompt, like the others, may be stored on the messaging system and recalled when needed. In block 402, the messaging system records the caller's message and stores it for the user. It will be understood that block 402 may include other call processing steps, such as options to review, erase, forward or otherwise modify the caller's message. These steps are not shown in order to simplify the Figure.

If the caller identifies the user's account number or extension in response to block 403, then call flow 400 will move to block 408 wherein it plays another "youhavereached" message. This message is concatenated with the user's account number in block 409. For example, if the user's extension is 4321, the caller will hear the message "You have reached 4321." The "Play Number" prompt in block 409 must be localized using the present invention. The number has to be modified as appropriate using, for example, the TNClass discussed above so that the prompt "You have reached 4321" uses the proper local number format and the proper gender for the local language. For example, if the selected locale uses U.S. English, the numbers will be spoken as single digits in the prompt (i.e. "four, three, two, one"). On the other hand, if the selected locale uses French, these numbers will be grouped by two for the prompt (i.e. "*forty-three, twenty-one*" spoken in French).

The numbers that are played as a result of block 409 may also be stored as *.WAV or *.MP3 files. The messaging system preferably stores all versions of the numbers that may be used in a locale so that a prompt having the proper format and gender may be created using localization rules. The messaging system uses the localization rules and then concatenates the correct "youhavereached" and number prompts so that the caller hears a prompt that is appropriate for the selected locale.

It will be understood in the case of the prompts that the locale may correspond to the caller's locale or the user's locale, which might not be the same locale. The caller's locale may be identified by the caller's CLID or other information, or the locale used in prompts may be a default locale for a particular messaging system.

Figure 5 is an exemplary call flow 500 for playing announcements to a user regarding his message account. When a user selects "*" in call flow 400, the call flow is routed to block 501 of call flow 500. In block 501, the user is prompted for his Personal Identification Number (PIN). If the user does not respond, the call flow moves to block 502, wherein the messaging system terminates the user's call. If the user enters an invalid PIN, call flow 500 moves to block 503, wherein the user is prompted to reenter his PIN. After a predetermined number of failed attempts, the call flow terminates the connection in block 504.

When the user enters the correct PIN, call flow 500 moves to block 505 and plays a "youhave" message. This is the beginning of a prompt that notifies the user of any new email, voice mail or fax messages. In block 506, the system plays the number of new voice mail messages and then plays a singular or plural message from block 507. As a result, after the system has concatenated the various pieces of the prompt message, the user hears the prompt: "You have *x* new voice messages." The system selects the appropriate number in block 506 using the localization rules, so that the prompt sounds correct to a person from the user-selected locale.

Blocks 508 - 511 concatenate additional pieces to the prompt to notify the user of new email or fax messages. If there are no new messages of one or more types, then the call flow may insert the word "no" or "zero" in place of the number in blocks 506, 508 and/or 510. These words may also be selected based upon localization rules.

Once the system has played the complete "youhave" prompt in blocks 505-511, the user hears additional prompts from blocks 512 with instructions on how to access various elements of the messaging system. For example, the user may choose to listen to voice messages by pressing "1" on the keypad or choose to listen to email messages by pressing "2."

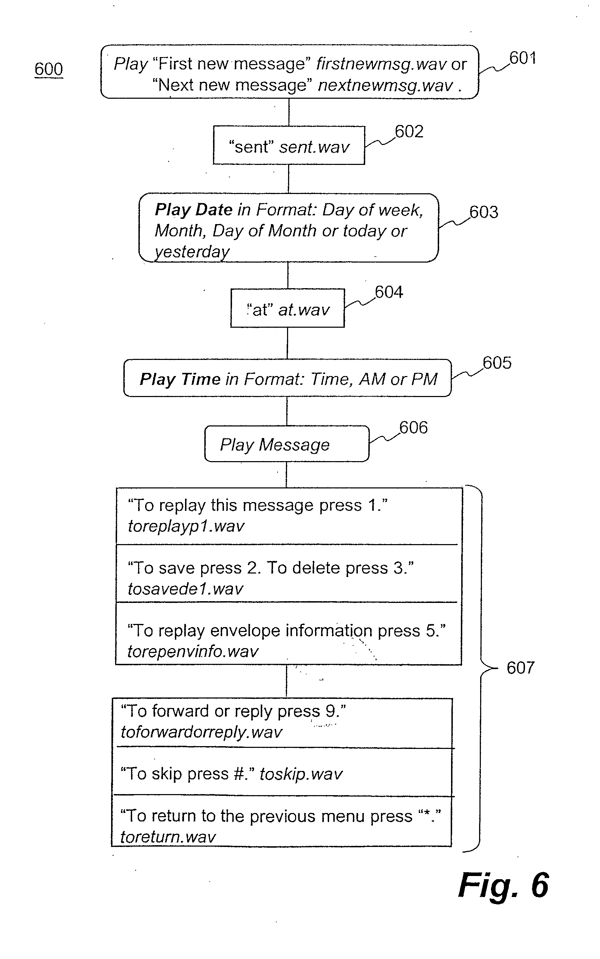

Figure 6 is an exemplary call flow 600 for playing voice messages to a user. If the user presses "1" in response to the prompts in block 512, the messaging system moves to call flow 600 and plays the prompt in blocks 601-605. Preferably, the *.WAV or *.MP3 files corresponding to blocks are concatenated so that the user hears the prompt as a complete sentence.

For the first message, the system plays the "firstnewmessage" prompt in block 601 and the "sent" prompt in block 602. In block 603, the system must again apply localization rules when it plays date information associated with the first new message. The system will select the date format according to the localization rules. As discussed above, the date format may be in a day/month/year, year/month/day, or month/day/year format depending upon the user's locale. The gender of the words for the day, month and year are also selected according to the localization rules.

After playing the date in block 603, the system plays the "at" prompt in 604 and then concatenates a time prompt in block 605. Preferably, the time prompt is selected using localization rules. As discussed above, depending upon the locale, the time may be presented in a 12-hour or 24-hour clock format, or the time may be broken into periods such as morning, afternoon, and the like.

In block 606, the system plays the first new voice mail message for the user. The call flow in block 607 allows the user to save, replay or otherwise manipulate the voice mail message. After playing a first new voice mail message, if there are additional new voice mail messages, call flow 600 returns to block 601 and plays a prompt beginning with the "nextnewmessage" prompt and concatenated with prompts from blocks 602-705, including date and time prompts from blocks 603 and 605 having proper localization. The call flow is repeated until the user exits or moves to another feature of the messaging system, such as email retrieval.

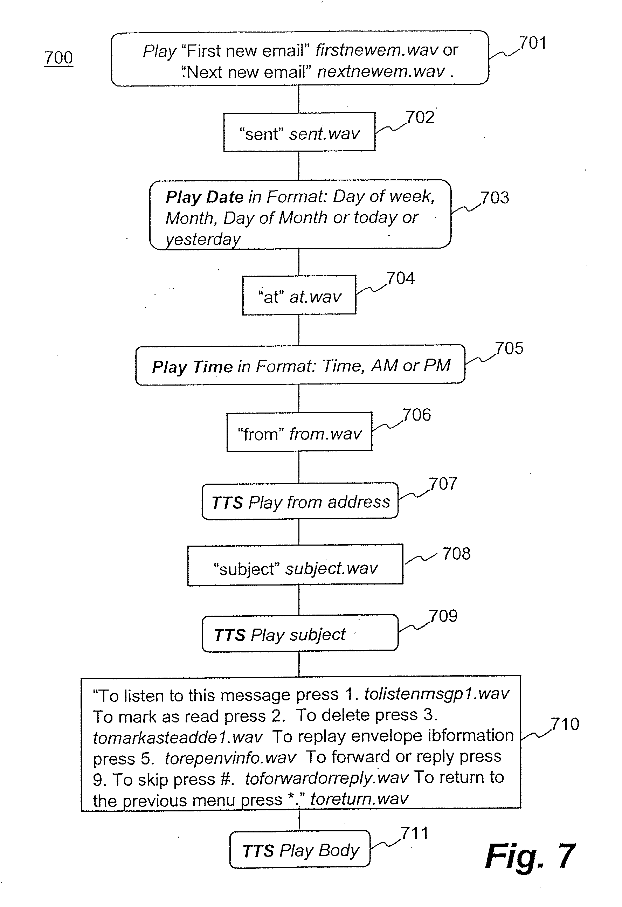

Figure 7 is an exemplary call flow 700 for retrieving email messages. If the user presses "4" in response to the prompt at block 512, in Figure 5, the call flow will proceed to block 701 of Figure 7. The messaging system concatenates the prompts associated with blocks 701 - 709 to create a prompt that notifies the user of information associated with the new emails that have been received. Blocks 701 - 705 create a prompt that is similar to the new voice mail prompt 601-605. The 701 - 705 prompt identifies the first new email and the date and time it was sent. The date and time prompts in blocks 703 and 705 are generated using the localization rules.

The time and date portions of the prompt have a limited number of values and, therefore, these portions can be prerecorded and stored in the messaging system. Accordingly, the portions of the prompt that are generated in blocks 703 and 705 may be selected from stored *.WAV or *.MP3 files based upon the proper format, gender and other considerations in the localization rules.

However, it is not possible to pre-record the sender's name or email address or the subject line of the email message. Therefore, this information must be generated by the TTS engine. Accordingly, in order to generate the prompts in blocks 707 or 709, the sender's email address and the email subject line must be sent to the TTS engine. Preferably, the conversion of the sender address and subject line to speech is performed using the localization rules so that the resulting prompt sounds correct to the user.

In block 710, the user is prompted to listen, delete, replay or otherwise act on the email message. In the present example, if the user selects "1," then call flow 700 moves to block 711 and plays the text of the email for the user. This text is played using the TTS engine, which applies the localization rules as discussed above while converting the email text to speech.

It will be understood that one of skill in the art may develop call flows to play prompts for the user to access a calendar, address book, task list, or the like. Information such as a calendar date or time, or a contact's address may be incorporated into a system prompt, or converted in a TTS engine, using localization rules so that the resulting prompt sounds correct to the user.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A system for providing text interpretation rules for a text-to-speech engine, comprising:
a text-to-speech engine that receives text-based information and converts the text-based information to spoken words;
a set of locale-specific rules that define how certain text-based information should be interpreted in the text-to-speech engine, wherein said set of locale-specific rules include text interpretation rules for a plurality of languages, dialects or locations.

2. The system of claim 1 further comprising:
a text message storage device for storing a plurality of text messages, wherein said text messages may be transmitted to the text-to-speech engine for conversion to a corresponding audio message.

3. The system of claim 1 further comprising:
a processor for identifying a desired locale to be used for conversion of a text-based information.

4. The system of claim 3 wherein said desired locale corresponds to a locale identified by a user who will receive converted text-based information.

5. The system of claim 3 wherein said desired locale corresponds to a locale that is associated with the text-based information that is to be converted.

6. The system of claim 1 wherein said set of locale-specific rules are organized in a hierarchical manner in which text interpretation rules that are common to two or more locales are grouped at one level and wherein text interpretation rules that are specific to a particular locale are grouped at a lower level on the hierarchy.

7. A method for providing native-sounding messages when converting text to speech, comprising:
identifying a selected locale to be used when converting said text to speech;
identifying one or more elements in said text that should be interpreted using locale-specific rules; and
accessing a set of locale-specific rules for instructions regarding how to convert said one or more elements to speech, wherein said locale-specific rules are associated with said selected locale.

8. The method of claim 7 wherein said one or more elements are selected from the group consisting of:
numbers,
characters,
symbols,
abbreviations, and
punctuation marks.

9. The method of claim 7 further comprising:
identifying one or more numbers in said text; and
determining a number type of said one or more numbers.

10. The method of claim 9 wherein said number type is selected from the group consisting of:
a time;
a date;
a key number;
a telephone number;
a duration number;
an address number; and
a counting number.

11. The method of claim 7 wherein said one or elements are case-sensitive for the selected locale; and the method further comprising:
determining a proper case to be used for said one or more elements when the one or more elements are converted to speech.

12. The method of claim 7 wherein said one or more numbers are gender-sensitive for the selected locale; and the method further comprising:
means for determining a proper gender to be used for said one or more elements when the one or more elements are converted to speech.
